# EUROPEAN PATENT APPLICATION

(11) **EP 4 810 381 A1**
(43) Date of publication of application: **23.09.2026**
(21) Application number: 25305384.7
(22) Date of filing: 19.03.2025
(51) Int. Cl.: B64G 1/22, B64G 1/50, B64G 1/52, B64G 4/00

(54) **REPAIRABLE INFLATABLE RADIATOR SYSTEM FOR THERMAL HEAT DISSIPATION IN SPACE**

(71) Applicant: Rovial SAS, 31770 Colomiers (FR)
(72) Inventor: The designation of the inventor has not yet been filed
(74) Representative: Cabinet Beau de Loménie

(57) **Abstract**

An inflatable radiator system (100) is designed to reject thermal power into space. The thermal power may originate from various heat sources like payloads or solar heat engines. The radiator system can be deflated and folded to reduce volume during launch and inflated in orbit to cover a large surface for efficient heat rejection, while maintaining a low mass. The inflatable radiator system (100) includes a piping network (102) having an inflated configuration and a folded configuration, a webbing (104) that extends between sections of the piping network such that the webbing is configured to provide structural support to the piping network in the inflated configuration, an inflation system (110) configured to inflate the piping network, a repair robot (106) attached to the piping network and configured for repairing damage to the piping network, and a health monitoring system (114) configured for monitoring the piping network and detecting damage to the piping network.

## Description

### BACKGROUND

### Field of the Art

The present disclosure is related to the field of thermal management of objects or spacecraft in space. In particular, the present disclosure is related to an inflatable radiator system for regulating and dissipating heat effectively in outer space environments.

### Discussion of the State of the Art

The rejection of heat in space, a process which can only be accomplished through thermal radiation, necessitates a large surface area, which presents significant challenges due to the constraints of space travel. Specifically, the mass of the apparatus is a primary factor in the cost of launching it into orbit. As such, any device designed to reject heat in space must be as lightweight as possible to be economically feasible.

Additionally, the volume of the device is another critical consideration, as the space within the launcher is highly limited. This restriction on volume is incompatible with the need for a large surface area once the device is in orbit.

In a pressurized module, the heat is transferred from the heat source to the pressurized gas by convection. This gas is selected to ensure compatibility with the heat source (which can be hardware, human, or the like). Conventional radiators include small piping which allows a low mass flow that requires efficient heat transfer fluids. For this reason, liquids are usually used instead of gas. Consequently, these two constraints on the fluid properties do not allow a single fluid to be used for both pressurizing the pressurized module and transferring the heat to the radiator. For this reason, when conventional radiators are used to cool down a pressurized module, heat exchangers are required as an interface between the two fluids. This heat exchanger adds mass, volume and complexity to the design.

Previous attempts to solve these problems have primarily involved the use of rigid panels as radiative surfaces. These panels are stacked on top of one another to minimize the volume within the launcher. However, this approach has proven to be only partially effective. The rigidity required of the panels once deployed, as well as the deployment process itself, necessitates additional systems. These systems not only add to the overall mass of the device, but also introduce a high risk of failure during the deployment process.

Furthermore, the need for local rigidity in the panels also contributes to an increase in mass. This approach, therefore, fails to adequately address the key challenges of mass and volume, while also introducing additional risks and complexities.

### SUMMARY

The invention presented herein is an inflatable radiator system designed to reject thermal power into space in order to maintain the integrity and performance of various heat sources. These sources could include payloads, heat engines converting heat energy from the sun into electricity, among others. The inflatable radiator system offers a unique solution to the challenges of space heat rejection, especially for high-power applications, as it can be deflated and folded to reduce volume during launch, and inflated in orbit to cover a large surface area. This allows for efficient heat rejection with minimal mass. In particular, the mass of the inflatable radiator is about ten times less than that of conventional radiators.

The simplicity of this system is another advantage. The deployment and rigidity of the radiator are ensured by its inflation, eliminating the need for additional systems that increase mass and risk of failure.

The inflatable radiator presents a better mass to surface ratio compared to conventional solutions. The radiator's design merges the radiating surface with the pressurized piping network into a single component. As the radiating surface needs to be large, the pressurized piping network can be large as well, allowing for large mass flow. This enables the use of the same fluid for pressurizing the module and cooling it.

The benefits of the inflatable radiator system in accordance with the present invention extend beyond its primary function. Its simple design allows for easy adaptation to various needs. The heat transfer fluid can be a single-phase gas, enabling the use of existing fans as a work source. In the case of pressurized modules, all necessary systems are embedded in an earth-like environment, negating the need to modify terrestrial equipment.

The inflatable radiator system includes a pressurized piping network able to resist at least 190 micrometeorite and/or debris penetrations, webbing, a repair robotic system especially designed to move around the piping network and repair damage to the piping network, a shelter system for the robotic system, an inflation system and/or gas tank, and a health monitoring system and/or impact detection system, designed for a reparation request every 29 days. The inflatable radiator system may also include a fan to ensure fluid circulation in the radiator. Alternatively, the inflatable radiator system may include any other device required for a heat engine loop, such as a compressor. The inflatable radiator system is designed to attach to a spacecraft module.

In one example, the present invention is an inflatable radiator system for rejecting thermal power into space. The system includes a piping network having an inflated configuration and a folded configuration. The piping network may include a single, continuous length of pipe, one fluid inlet, and one fluid outlet. The piping network may be deflated in the folded configuration. The piping network may be made of titanium piping and may have a wall thickness between 200µm and 500 µm. The system further includes a webbing that extends between sections of the piping network such that the webbing is configured to provide structural support to the piping network in the inflated configuration. The webbing may be made of titanium. The system further includes an inflation system configured to inflate the piping network. The inflation system may include a gas tank. The system further includes a repair robot attached to the piping network and configured for repairing damage to the piping network. The repair robot may include wheels having magnetic tracks. The repair robot may be a first repair robot disposed on a first surface of the webbing, and the system may further include a second repair robot disposed on a second surface of the webbing and magnetically coupled to the first repair robot. The system further includes a health monitoring system configured for monitoring the piping network and detecting damage to the piping network. The health monitoring system may include an impact detection system. The health monitoring system may be in communication with the repair robot. The system may further include a fan configured to ensure circulation of fluid in the piping network and/or a shelter configured for housing the repair robot.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
Figs. 1A and 1B are perspective views of a portion of an inflatable radiator system, in accordance with an aspect of the present invention.
Fig. 2 illustrates four exemplary shapes of the radiator, in accordance with aspects of the present invention.
Fig. 3 illustrates an example of an inflatable radiator system for high power applications, in accordance with an aspect of the present invention.
Fig. 4 illustrates examples of different shapes of a piping network in folded and inflated configurations, in accordance with an aspect of the present invention.
Fig. 5 is a chart illustrating the correlation between radiator mass, radiator wall thickness, and robot repair time, in accordance with an aspect of the present invention.
Fig. 6 is a perspective view of an inflatable radiator illustrating the heat transfer mechanics employed by the radiator, in accordance with an aspect of the present invention
Fig. 7 illustrates an example of a shape of the piping network for the inflatable radiator system, in accordance with an aspect of the present invention
Fig. 8A illustrates a repair robot attached to a first surface of the webbing of the inflatable radiator system, in accordance with an aspect of the present invention
Fig. 8B illustrates two repair robots attached to opposite surfaces of the webbing of the inflatable radiator system, in accordance with an aspect of the present invention.

### DETAILED DESCRIPTION

The present invention is for an inflatable radiator system designed for thermal heat dissipation in space environments. The inflatable radiator system is configured to be attached to a spacecraft that may require thermal heat dissipation. The invention is described by reference to various elements herein. It should be noted, however, that although the various elements of the inventive apparatus are described separately below, the elements need not necessarily be separate. The various embodiments may be interconnected and may be cut out of a singular block or mold. The variety of different ways of forming an inventive apparatus, in accordance with the disclosure herein, may be varied without departing from the scope of the invention.

Generally, one or more different embodiments may be described in the present application. Further, for one or more of the embodiments described herein, numerous alternative arrangements may be described; it should be appreciated that these are presented for illustrative purposes only and are not limited to the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements

Headings of sections provided in this patent application and the title of this patent application are for convenience only and are not to be taken as limiting the disclosure in any way.

Devices and parts that are connected to each other need not be in continuous connection with each other, unless expressly specified otherwise. In addition, devices and parts that are connected with each other may be connected directly or indirectly through one or more connection means or intermediaries.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

### Apparatus

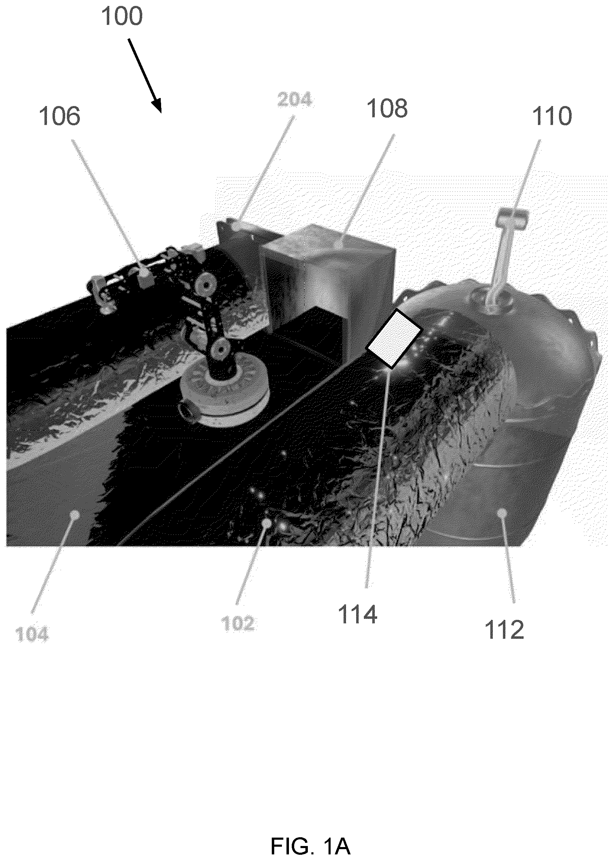

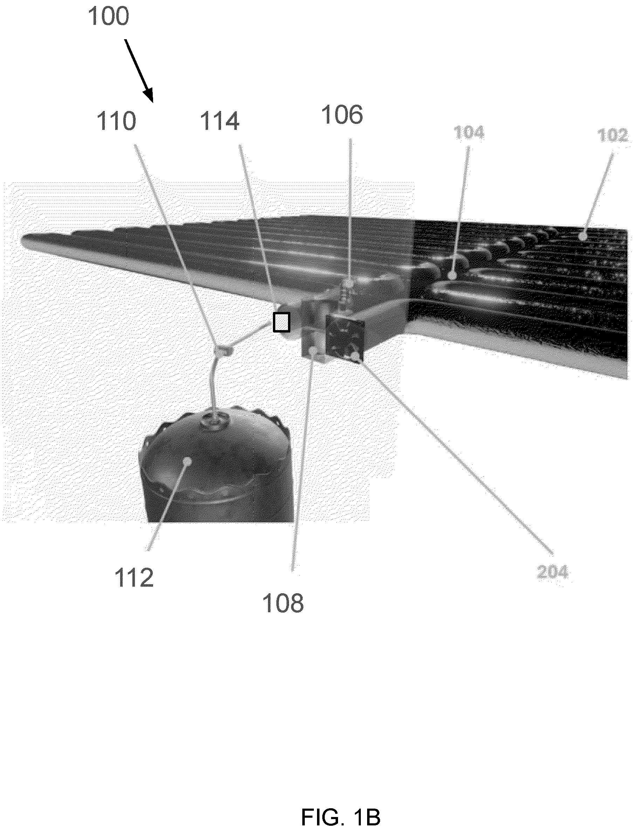

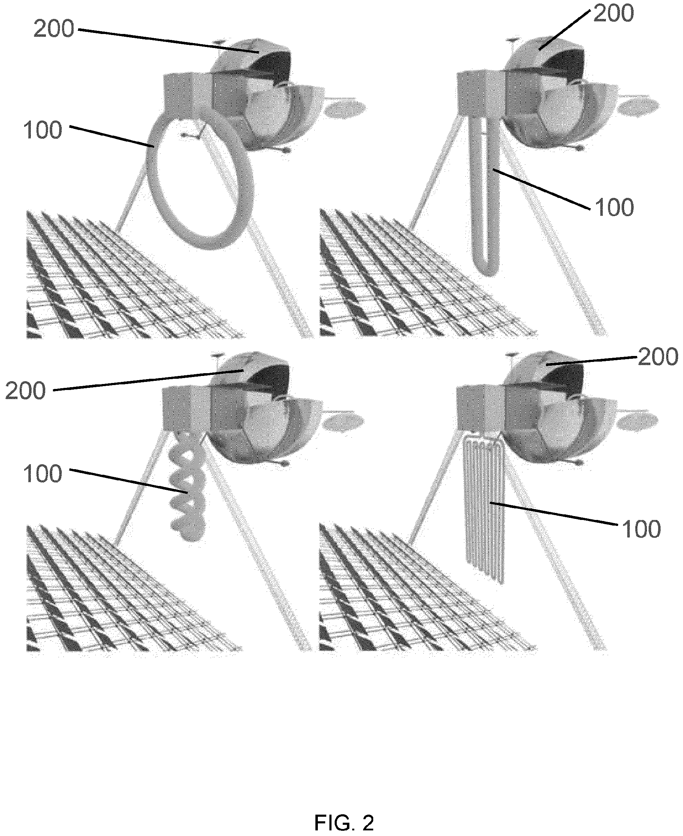

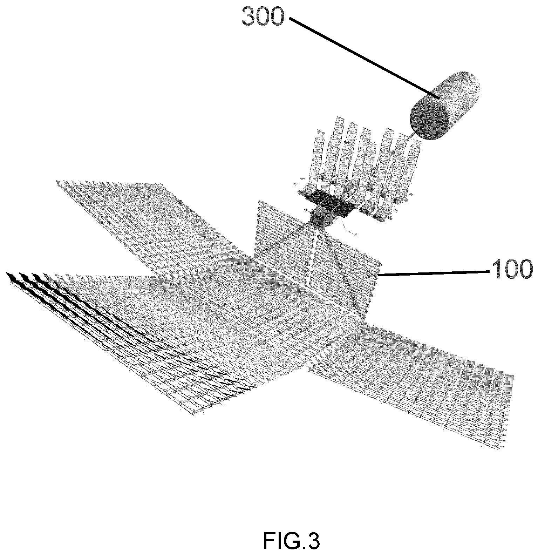

An inflatable radiator system 100 for facilitating the rejection of thermal power into space is depicted in Figs. 1A and 1B. The radiator system 100 includes an inflatable radiator that comprises a pressurized piping network 102 that allows heat transfer fluid to circulate, and a webbing 104 for structural support of the piping network 102. The radiator system 100 further comprises a repair robot 106, a shelter 108 for maintenance and protection of the robot 106, an inflation system 110, gas tanks 112, and a health monitoring system and/or impact detection system 114 for monitoring and detecting potential damage to the piping network 102. Additionally, the system 100 may include a fan 204 for fluid circulation. As an alternative to the fan 204, another device for a heat engine loop, such as a compressor may be used. The inflatable radiator system 100 is configured to attach to a spacecraft module 200, 300, as depicted in Figs. 2 and 3. By integrating with the spacecraft 200, 300, the radiator system 100 is configured for managing heat generated by various sources onboard the spacecraft.

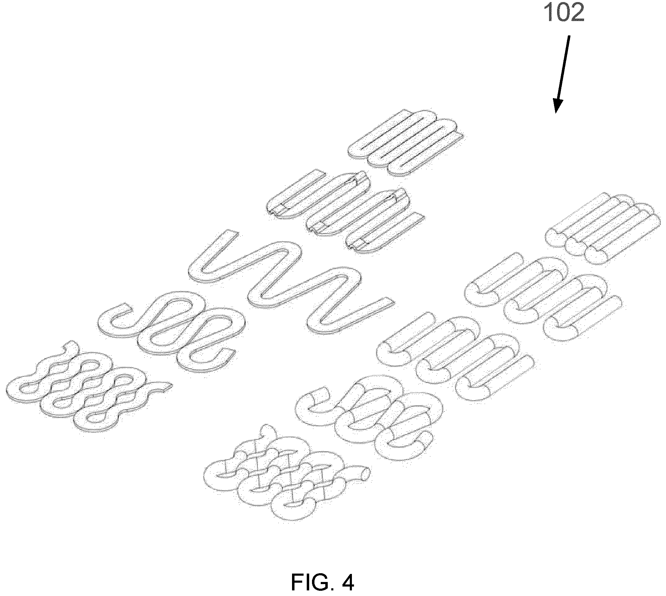

During launch, the inflatable radiator is deflated and folds along the spacecraft body. Fig. 4 illustrates some non-limiting examples of the shape of the piping network 102. In particular, Fig. 4 illustrates sections of the piping network 102 in inflated configurations on the right side and corresponding deflated configurations on the left side. Exemplary shapes for the piping network 102 may include a torus or two straight sections with a half turn. The folding configuration of the piping network 102 may include accordion-style folding, which folds in a manner that allows for compression of the straight sections, party horn-style folding, which flattens the piping network 102 before rolling it, Chinese fan-style folding, which folds only a part of the piping network, spring folding, origami folding, or the like.

The pressurized piping network 102 is a flexible system that conducts thermal fluid along the radiator. This network 102 connects to the heat engine and/or spacecraft module. When the radiator system 100 is used to dissipate payload heat, the temperature is limited, allowing for a wider range of potential materials.

The piping network 102 may be made of a material having a desirable strength to mass ratio at high temperatures. That is, the material used for the piping network 102 has high strength and low mass. The material of the piping network 102 may be resistant to micrometeorite impacts, be able to handle pressurization loads, and support deformation during folding. For example, the piping network 102 may be made of aluminum, steel, titanium, polymer, or the like, or combinations thereof.

In one example, a coating or treatment may be applied to the outer surface of the piping network 102 in order to improve the emissivity of the pressurized piping network 102 and thereby increase the heat rejected. Suitable coating materials may include graphene, hexagonal boron nitride, OAS (oxidation anodizing sulfuric), or the like.

The process for assembling the piping network 102 and the webbing 104 depends on the material type, with welding being a potential solution for metallic materials. This strategy is closely linked to the integration of potential webbing. The folding strategy is dependent on the geometry and material used, with parameters such as thickness, welding capacity, and plastic deformation limit considered. Titanium welding and external coating may be used for the webbing 104.

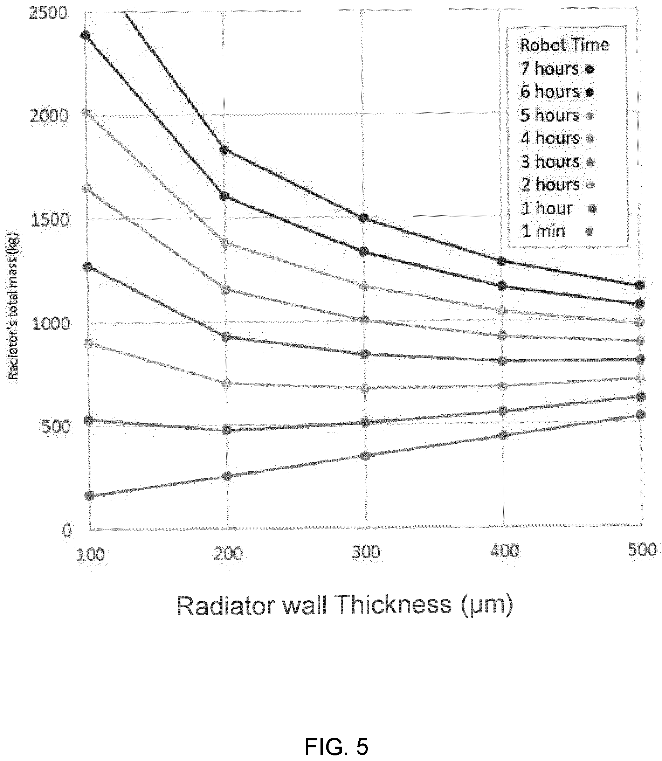

In one example, the piping network 102 and webbing 104 are made of titanium. The wall thickness of the piping network 102 may be between 200µm and 500 µm in order to facilitate the deflation and folding of the piping network 102. Further, the wall thickness facilitates the repair robot 106 completing repairs within a desired time limit (between 1 and 2 hours). Fig. 5 depicts the correlation between the wall thickness of the piping network 102, the total mass of the radiator, and the time it takes for the robot 106 to perform a repair.

In another example, aluminum may be used as the material for the piping network 102. The mass of aluminum is lower than that of titanium by about 20%. However, the safety factor is low, which represents a risk, especially from a fatigue point of view, and because the calculation on micrometeorite and orbital debris perforation partially takes into account the temperature influence. On top of that, the theoretical bending radius (for the launcher volume) is higher for aluminum. As such, while aluminum may be a more desirable material due to its lower mass, the safety and failure risk of using aluminum is higher.

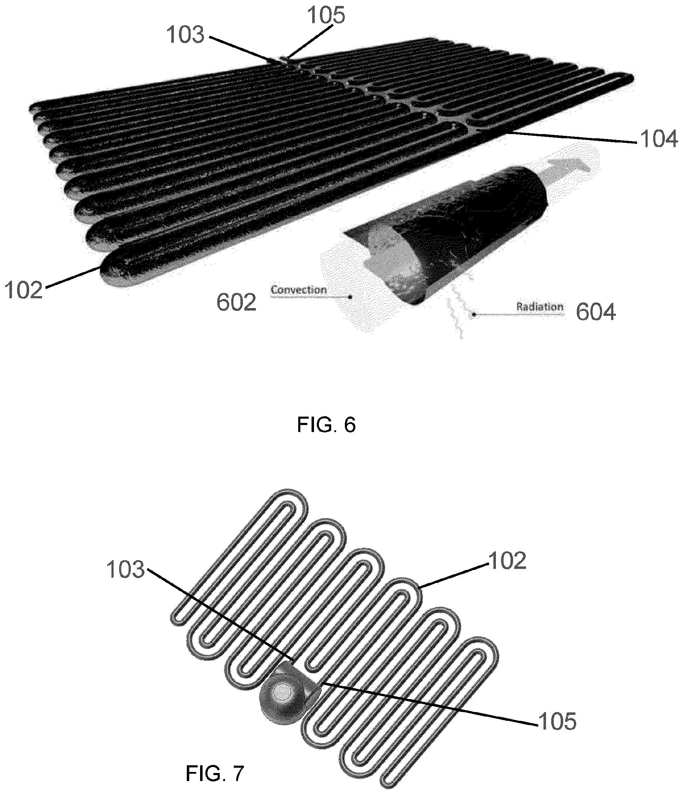

Fig. 7 depicts one example of the shape of the piping network 102. The pressurized piping network 102 is a single, continuous length of pipe having one gas inlet 103 and one gas outlet 105. The network 102 transfers heat power by forced convection 602 from the gas to the pipe walls, then through conduction from the inner side to the outer side of the pipe walls, and finally, the heat is transferred into space through radiation 604, as shown in Fig. 6.

The piping network 102 may have any desired shape as shown in Fig. 2 where the webbing 104 has been removed to clearly show the shapes of the piping network 102. In general, shapes having a higher surface area are better suited to higher power applications. Fig. 3 depicts a configuration for the inflatable radiator system 100 that has a large surface area and may be used for high-power (e.g., greater than 500kW) applications in space.

The webbing 104 enhances the mechanical strength of the pressurized piping network 102 and provides support for displacement of a repair robot 106. The webbing 104 may be made of the same material as the pressurized piping network 102. The thickness of the webbing 104 can be adjusted to meet the demands of the mechanical strength required.

The webbing 104 may be assembled in conjunction with the pressurized piping network 102 and can be designed to support health monitoring systems 114, including impact sensors. The use of high thermal conductive material in the webbing 104 can increase the radiative surface, improving the overall efficiency of the system 100.

To facilitate folding or reduce mass, discontinuities can be incorporated into the webbing surface. By connecting the pressurized piping network 102 at different stages, the webbing 104 helps maintain mechanical strength during mechanical loads coming from the spacecraft acceleration. It also ensures a global flatness of the radiator, minimizing the field of view between each section of the pressurized piping network and maintaining correct orientation for avoiding external heat sources, such as the sun.

In one example, the piping network 102 and the webbing 104 are made at the same time. In this example, two sheets of material (e.g., titanium) are welded together in selected areas to create a fluid chamber between the sheets. The fluid chamber is created in the desired shape of the piping network 102. The portions of the sheets that do not form the fluid chamber create the webbing 104 in the spaces between sections of the fluid chamber.

In other examples, the inflatable radiator system may not include the webbing at all. Alternatively, other materials may be used in the construction of the webbing. For instance, high transparent thermal radiative material could reinforce the pressurized piping network by adding layers of webbing. This type of high transparent thermal radiative webbing may contribute to protecting the pressurized piping network from micrometeorite or orbital debris.

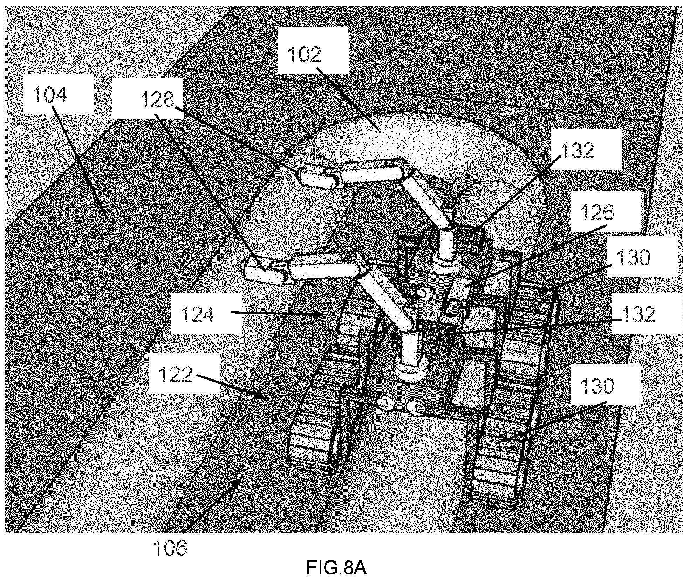

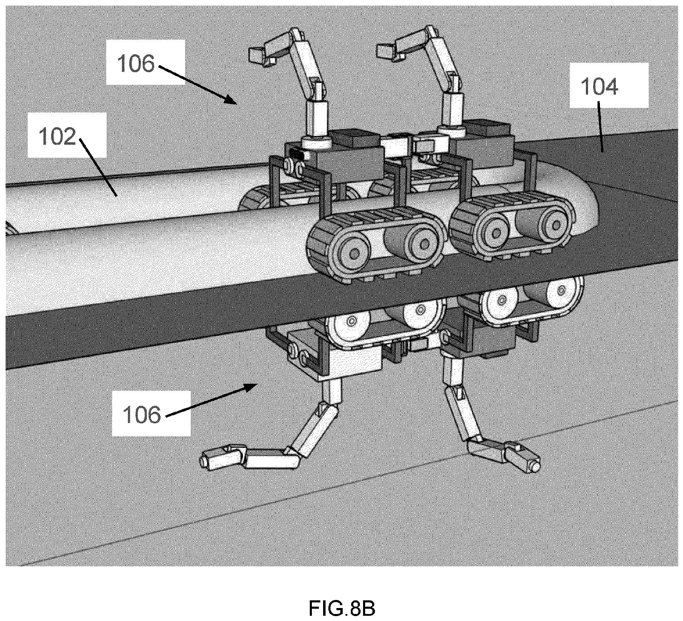

The inflatable radiator system 100 may include a repair robot 106 and a shelter system 108, shown in Figs. 1A and 1B. The repair robot 106 is designed to repair leaks caused by impacts from micrometeorites and orbital debris. As shown in Figs. 8A and 8B, the robot 106 may be positioned along the piping network 102 over the piping and/or on the webbing 104. The robot 106 is equipped with a displacement system, a leak detection system, a communication system (for communication with the spacecraft), a power management system, a control system, and a repair system. The repair system may include a robotic arm and a container for holding repair patches. Temperature conditions, as well as other aspects related to the space environment, are taken into consideration to ensure resiliency of the repair materials.

The robot 106 is configured to reach anywhere on the piping network 102, which can have a serpentine configuration with sharp turns. To achieve the turning, in one example, the robot 106 may include two modular sections 122, 124 connected through an actuated universal joint 126. Such arrangement also allows the robot 106 to have two arms 128, where one arm 128 is mounted to each one of the mobile robotic modules 122, 124. This allows the robotic system to perform the patching task with one arm and hold the sensing system at the right perspective with the other arm. The dual arms 128 will also allow the robot 106 to perform repair tasks needing bi-manual manipulation.

The robot 106 is further configured for space operation conditions, including the lack of gravity. Because of this, there is a need to develop a solution so that the robot 106 is not floating away in space and is always attached to the radiator. As such, the wheels 130 of the robot 106 may have magnetic tracks. The magnetic tracks will be attached magnetically with the magnetic tracks of another robot 106 on the opposite side of the radiator and they will move in unison, as shown in Fig. 8B. This further ensures that both sides of the radiator are covered by operational robots on each side. Further, the large surface area of the magnetic track ensures enough contact surface to prevent the robots from getting detached while moving or performing repair tasks. Because the two robots 106 are magnetically coupled to each other with the radiator sandwiched therebetween, the material of the radiator is not required to be magnetic. The magnetic tracks of the robots 106 may be Samarium cobalt magnets, which can withstand the temperature swings of the space environment being between -120°C to 220°C. In another example, the material used for the webbing 104 may be magnetic so that each one of the robots 106 is magnetically attached to the webbing, thereby eliminating the need for two opposite robots. That is, robots may be positioned on both sides of the radiator, but are not required to be coupled together and move in unison.

The repair robot 106 may further include a stereo camera for localization and to assist with navigation. Still further, the robot 106 may include encoders in its wheels 130 to determine odometry of the robot. That is, the encoders may be used to determine how far the robot 106 has moved. A controller system may use the odometry data as well as data from other sensors, such as the camera, to generate motion commands for the robot 106. The robot may further include other sensors, such as an inertial measurement unit. The robot 106 may further include an onboard power supply, a single board computer on each module 122, 124, and a wireless communication module (such as Wi-Fi 6 /7). All the components of the robot 106 are space grade. The robot 106 may further include a container 132 for holding a supply of repair patches.

Still further, the robot 106 may be configured to reach and repair the leak site within 2 hours, so that the leak is not significant. To facilitate this time limit, the shelter 108 is placed strategically so that the robot 106 can navigate and reach the leak position within the desired time. In addition, AI based path planning strategy may be used to control the robot 106 to optimize the time and other parameters.

The shelter system 108 provides protection for the robot 106 when it is in standby mode, shielding it from extreme temperature variations, space radiation, and impacts from micrometeorites and orbital debris. Additionally, the shelter system 108 may serve as a charging station for the robot 106.

Upon detection of a leak by the impact detection system 114, the robot 106 is notified and given the approximate location of the leak. The robot 106 then exits its shelter 108, moves to the leak location, precisely locates the leak with its embedded detection system, and performs the repair. To repair, after the robot 106 reaches the leak location, the robot 106 uses onboard sensors to determine more precise and real-time position and status of the damaged area. The robotic arms 128 are maneuvered to pick a patch from the storage container 132. The repair patch may have pre-applied UV adhesive solution to facilitate sticking to the leak location. There may be a UV LED illuminator on the end of the robotic arm 128 to harden the UV adhesive and stick it permanently just by the means of exposure. Adhesive and patch materials are rated for use in space. After the repair, the robot 106 verifies the absence of a leak with its detection system before returning to its shelter 108.

To ensure the reliability of the repair function, multiple robots may be used. In the case of displacement over the piping or over the webbing, at least one robot on each side of the radiator may be used. The goal during the repair is to minimize the impact on operations and prevent excessive gas loss.

The inflatable radiator system 100 further includes an inflation system 110 and gas tanks 112. The inflation system 110 is designed to inflate the piping network 102, which in turn unfolds it. The inflation system 110 also provides rigidity to the pressurized piping network 102 through pressurization. The inflation system 110 includes a control system, valves, a piping network, and tanks.

The tanks 112 are designed not only to store enough fluid to inflate the radiator in orbit but also to provide refills during the lifetime of the system 100 to compensate for any leaks. Gas is transferred from the tanks 112 to the pressurized piping network 102 through the inflation system 110.

The inflation system 110 is designed to release gas from the tank 112 to the pressurized piping network 112 if the pressure is too low. Conversely, if the pressure is too high, the inflation system 110 can release pressure into space. While the radiator is inflatable, it does not mean that only gas can be used. Liquid is also a viable alternative. However, the use of liquid may be less advantageous as it cannot be compressed in the tank during launch.

As an alternative to the inflation system, sublimation powder could be used to inflate the pressurized piping network 102. This substance sublimates, or transitions directly from a solid to a gas, and could provide an efficient method for inflating the system.

The inflatable radiator system 100 includes a health monitoring system that includes an impact detection system 114 designed to measure vital signs of the system 100. The health monitoring system may include sensors for pressure, temperature, density, and accelerometers used for impact detection. These sensors are strategically positioned to perform their respective measurements and are capable of transferring their data to a central processing unit.

The measurements taken by the impact detection system 114 serve to detect any failures and relay this information to other systems to prevent abnormal situations. The health monitoring system communicates with the inflation system 110 to maintain the appropriate pressure within the system 100. It also communicates with the repair robot 106 to initiate a leak repair procedure when necessary.

The inflatable radiator system 100 includes a fan 204, designed to facilitate fluid circulation within the piping network 102. The fan 204 is configured to maintain the necessary flow of thermal fluid for the radiator's function. Other devices, already required for a heat engine loop, such as a compressor, may be used instead of the fan 204.

Furthermore, the inflatable radiator system 100 integrates with a spacecraft module. The spacecraft module provides a secure attachment point for the inflatable radiator system 100 and is designed to incorporate the shelter system 108. The design of the spacecraft module ensures a seamless integration of the radiator with the spacecraft, contributing to the overall functionality and efficiency of the system. The spacecraft module, along with any other components connected to the thermal fluid loop, can be considered as part of the broader system.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. An inflatable radiator system for rejecting thermal power into space, the system comprising:
a piping network having an inflated configuration and a folded configuration;
a webbing that extends between sections of the piping network such that the webbing is configured to provide structural support to the piping network in the inflated configuration;
an inflation system configured to inflate the piping network;
a repair robot attached to the piping network and configured for repairing damage to the piping network; and
a health monitoring system configured for monitoring the piping network and detecting damage to the piping network.

2. The inflatable radiator system of claim 1, wherein the piping network comprises a single, continuous length of pipe, one fluid inlet, and one fluid outlet.

3. The inflatable radiator system of claim 1 or 2, wherein the piping network is deflated in the folded configuration.

4. The inflatable radiator system of any of claims 1 to 3, wherein the repair robot comprises wheels having magnetic tracks.

5. The inflatable radiator system of any of claims 1 to 4, wherein the repair robot is a first repair robot disposed on a first surface of the webbing, and wherein the system further comprises a second repair robot disposed on a second surface of the webbing and magnetically coupled to the first repair robot.

6. The inflatable radiator system of any of claims 1 to 5, further comprising a fan configured to ensure circulation of fluid in the piping network.

7. The inflatable radiator system of any of claims 1 to 6, wherein the inflation system comprises a gas tank.

8. The inflatable radiator system of any of claims 1 to 7, wherein the health monitoring system comprises an impact detection system.

9. The inflatable radiator system of any of claims 1 to 8, further comprising a shelter configured for housing the repair robot.

10. The inflatable radiator system of any of claims 1 to 9, wherein the piping network is made of titanium piping having a wall thickness between 200µm and 500 µm.

11. The inflatable radiator system of claim 10, wherein the webbing is made of titanium.

12. The inflatable radiator system of any of claims 1 to 11, wherein the health monitoring system is in communication with the repair robot.
